# EUROPÄISCHE PATENTSCHRIFT

(11) **EP 3 537 707 B1**
(45) Veröffentlichungstag und Bekanntmachung des Hinweises auf die Patenterteilung: **28.07.2021**
(21) Anmeldenummer: 18160253.3
(22) Anmeldetag: 06.03.2018
(51) Int. Cl.: H04N 5/232, G06K 9/00

(54) **KAMERAKERN EINER SMART KAMERA FÜR DIE INDUSTRIELLE BILDVERARBEITUNG UND VERFAHREN ZUR INDUSTRIELLEN BILDVERARBEITUNG**
CAMERA CORE OF A SMART CAMERA FOR THE INDUSTRIAL PROCESSING OF IMAGES AND A METHOD FOR INDUSTRIAL IMAGE PROCESSING
CORPS DE CAMÉRA D'UNE CAMERA INTELLIGENTE POUR LE TRAITEMENT D'IMAGES INDUSTRIEL ET PROCÉDÉ DE TRAITEMENT D'IMAGES INDUSTRIEL

(43) Veröffentlichungstag der Anmeldung: 11.09.2019
(73) Patentinhaber: B&R Industrial Automation GmbH, 5142 Eggelsberg (AT)
(72) Erfinder: Waldl, Andreas, 5142 Eggelsberg (AT)
(74) Vertreter: Patentanwälte Pinter & Weiss OG

(56) Entgegenhaltungen:
- WO-A1-2016/169667
- US-A1- 2003 193 571
- US-A1- 2006 088 196
- US-A1- 2009 027 509

## Beschreibung

Die gegenständliche Erfindung betrifft einen Kamerakern einer Smart Kamera für die industrielle Bildverarbeitung, mit einer Bildsensor-Schnittstelle zum Anschluss eines Bildsensors zur Aufnahme eines Bildes, wobei der Kamerakern als Hardware-Recheneinheit ausgeführt ist. Ferner betrifft die Erfindung eine Smart Kamera mit einem solchen Kamerakern und ein Verfahren zur industriellen Bildverarbeitung von Bilddaten, die mit einem Bildsensor einer Smart Kamera aufgenommen werden.

In der industriellen Bildverarbeitung werden sogenannte Smart Kameras verwendet. Diese zeichnen sich dadurch aus, dass damit nicht nur Bilder aufgenommen werden, sondern auch weiterverarbeitet werden. Die Weiterverarbeitung kann eine Vorbearbeitung der aufgenommenen Bilder umfassen, beispielsweise eine Filterung oder eine Aufbereitung oder Korrektur der Bilddaten, beispielsweise um Abbildungsfehler zu kompensieren, und/oder eine Auswertung der (eventuell vorbearbeiteten) Bilddaten umfassen, z.B. zur Erfassung von Messwerten, Ermittlung der Lage / Position / Ausrichtung eines Objektes, usw. Eine Smart Kamera übergibt damit an einer Schnittstelle keine Roh-Bilddaten, sondern in bestimmter Art und Weise zu einem Ausgangssignal verarbeitete Bilddaten oder aufbereitete Bilddaten. Selbstverständlich können von der Smart Kamera aber auch zusätzlich die Roh-Bilddaten übertragen werden.

Da solche Bildbearbeitungen üblicherweise rechenaufwendig sind und/oder oftmals hohe Aufnahmeraten erwünscht oder notwendig sind, ist es schon bekannt, in einer Smart Kamera eine Hardware-Recheneinheit (ein FPGA (Field Programmable Gate Array), ein ASIC (anwendungsspezifische integrierte Schaltung), ein CPLD (Complex Programmable Logic Device) oder ähnliches) und eine Software-Recheneinheit zur Verarbeitung der Bilddaten einzusetzen. Ein Beispiel hierfür kann der DE 10 2009 009 533 B4 oder der US 8,794,521 B2 entnommen werden. In der Hardware-Recheneinheit erfolgt eine Vorbearbeitung der aufgenommenen Bilddaten. Die vorbearbeiteten Bilddaten werden dann in der Software-Recheneinheit zu einer Ausgabegröße weiterverarbeitet, die von der Software-Recheneinheit als Ausgangssignal der Smart Kamera ausgegeben wird. Die Ausgabegröße dient beispielsweise der Steuerung einer Maschine oder Anlage, in der die industrielle Bildverarbeitung eingesetzt wird. In der DE 10 2009 009 533 B4 oder der US 8,794,521 B2 übernimmt die Software-Recheneinheit die Steuerung aller Komponenten der Smart Kamera, insbesondere des Bildaufnehmers und der Hardware-Recheneinheit. Auch ein Kommunikationscontroller, der die Datenschnittstelle mit der Außenwelt bereitstellt, ist an die Software-Recheneinheit angekoppelt und von dieser gesteuert.

In vielen Anwendungen ist es aber erforderlich, die Smart Kamera in ein Echtzeitsystem einzubinden. Das bedeutet insbesondere, dass die Bildaufnahme durch die Smart Kamera in einem vorgegebenen Echtzeitschritt synchron, deterministisch und mit einem möglichst geringen Jitter, typischerweise weniger als eine µs, erfolgen muss. Würde die Smart Kamera in einem Echtzeitsystem diese Echtzeitanforderungen nicht einhalten, so würde das eine Fehlermeldung auslösen und unter Umständen die gesamte Anlage, in der die Smart Kamera eingebunden ist, stillsetzen. Die Synchronität ist auch Voraussetzung für den Datenaustausch zwischen mehreren Echtzeitkomponenten, wie es beispielsweise bei hochdynamischen Maschinen oder Anlagen beispielsweise zwischen einer speicherprogrammierbaren Steuerung (SPS), Antriebskomponenten der Maschine oder Anlage und einer Smart Kamera nötig sein kann.

Grundvoraussetzung für den Datenaustausch zwischen mehreren Echtzeitkomponenten ist einerseits ein echtzeitfähiger Datenbus (Feldbus) oder ein Time-Sensitive Network (TSN), über das die Daten ausgetauscht werden und welches eine Synchronität, beispielsweise durch das in IEEE 1588 spezifizierte Precision Time Protocol (PTP) oder durch das Kommunikationsprotokoll, ermöglicht. Zusätzlich ermöglicht die vollständige Integration mehreren Echtzeitkomponenten eine einheitliche Datenbasis mit der jede einzelne Echtzeitkomponente Daten und Ereignisse einer anderen Echtzeitkomponente synchron steuern und beeinflussen kann.

Eine Software-Recheneinheit ist üblicherweise von den angeschlossenen Komponenten Interrupt gesteuert. Das bedeutet, dass eine an die Software-Recheneinheit angeschlossene Komponente auf einer Interruptleitung einen Interrupt anzeigt, der in der Software-Recheneinheit die Ausführung bestimmter Programmteile auslöst. Aufgrund vorhandener Interrupt Latenzzeiten, aber auch der notwendigen Priorisierung der Ausführung von Software in der Software-Recheneinheit, kann es mit einer Smart Kamera nach der DE 10 2009 009 533 B4 schwierig sein, harten Echtzeitanforderungen zu genügen, z.B. weil der dort beschriebene Kommunikations-Controller direkt mit der SW Recheneinheit verbunden ist oder weil die Aufnahme eines Bildes von der Software-Recheneinheit getriggert wird.

In der Offenlegungsschrift DE 10 2016 121088 A1 wird das Auslösen einer Bildaufnahme mit einem Aufnahmeregler gesteuert, auf Basis von im Netzwerk von einem Bewegungsregler kommunizierten Bewegungsdaten eines Objektes. Dazu ist im Aufnahmeregler eine Virtuellachsenanwendung in der SW-Recheneinheit vorgesehen, mit der die Bewegung des Objekts zur Bildauslösung nachgebildet wird. Das Auslösen der Bildaufnahme erfolgt somit durch einen Aufnahmeregler, der über ein Netzwerk mit einem Bewegungsregler kommuniziert. Dazu werden durch die Virtuellachsenanwendung auch zusätzliche Rechenressourcen benötigt. Es erschließt sich dem Fachmann, dass dabei selbst mit einem deterministischen Netzwerk, wie z.B. POWERLINK wie in der DE 10 2016 121088 A1, und/oder mit synchronisierten Uhren der Regler über IEEE-1588 Standards, harte Echtzeitanforderungen schon alleine durch die auftretenden Latenzzeiten der Kommunikation aufgrund der Regler Kaskade nur schwer einzuhalten sind. Hinzu kommen noch die benötigten zusätzlichen Rechenressourcen, die sich ebenfalls auf die Echtzeitfähigkeit auswirken.

Bei diesen bekannten Hardwarekonzepten einer Smart Kamera kann der Hardwareaufbau auch nicht einfach geändert werden, da die SW-Recheneinheit zentral für die Smart Kamera ist und diese über eine dazwischenliegende HW-Recheneinheit die Bildauslösung des Bildsensors steuert. Diese Komponenten der Smart Kamera müssen damit aufeinander und auf die Anwendung abgestimmt sein und können somit nicht einfach ausgetauscht werden. Die Konfiguration der Smart Kamera nach dem Stand der Technik ist damit fest vorgegeben.

Die US 2006/0088196 A1 offenbart ein integriertes Bildverarbeitungssystem mit einer Kamera zur Aufnahme von Bildern von bewegten Objekten. Das Bildverarbeitungssystem weist einen Bildsensor auf, der über eine Kamerasteuereinheit mit einem I/O-Controller und/oder Prozessor verbunden ist. Zum Auslösen einer Bildaufnahme kommuniziert der I/O-Controller über die Kamerasteuereinheit mit dem Bildsensor, wodurch in nachteiliger Weise Latenzzeiten resultieren.

Es ist eine Aufgabe der gegenständlichen Erfindung eine echtzeitfähige, hardwaremäßig flexibel konfigurierbare Smart Kamera anzugeben und ein damit durchgeführtes Verfahren der industriellen Bildverarbeitung.

Diese Aufgabe wird erfindungsgemäß gelöst, indem im Kamerakern zusätzlich eine Echtzeit-Datenbus-Schnittstelle zum Anschluss eines Echtzeit-Datenbusses und eine Kamerasteuereinheit vorgesehen sind, wobei die Kamerasteuereinheit mit der Echtzeit-Datenbus-Schnittstelle und der Bildsensor-Schnittstelle verbunden ist, und die Kamerasteuereinheit über die Echtzeit-Datenbus-Schnittstelle zum Auslösen einer Bildaufnahme innerhalb eines Buszyklus des Echtzeit-Datenbusses angesteuert ist, wobei die Kamerasteuereinheit die Bildsensor-Schnittstelle steuert. Das erfindungsgemäße Verfahren zeichnet sich dadurch aus, dass der Bildsensor über eine Bildsensor-Schnittstelle eines als Hardware-Recheneinheit ausgeführten Kamerakerns der Smart Kamera mit einer Kamerasteuereinheit des Kamerakerns verbunden wird und die Kamerasteuereinheit mit einer Echtzeit-Datenbus-Schnittstelle des Kamerakerns verbunden wird, wobei die Kamerasteuereinheit das Auslösen einer Bildaufnahme innerhalb eines Buszyklus des Echtzeit-Datenbusses durch den Bildsensor steuert, wenn über einen an die Echtzeit-Datenbus-Schnittstelle angeschlossen Echtzeit-Datenbus ein Synchronisations-Datenpaket empfangen wird.

Diese Ausführung ermöglicht das echtzeitfähige Auslösen einer Bildaufnahme mit dem Bildsensor, weil die Bildsensor-Schnittstelle über die Kamerasteuereinheit eng mit der Echtzeit-Datenbus-Schnittstelle und einem daran angeschlossenen Echtzeit-Datenbus verbunden ist. Zusätzlich kann der Kamerakern flexibel mit verschiedenen Bildsensoren verbunden werden, um die Smart Kamera an die Anforderungen anzupassen.

Vorteilhafterweise ist in der Hardware-Recheneinheit eine Datenschnittstelle zum Anschluss einer Software-Recheneinheit vorgesehen, wobei die Datenschnittstelle mit der Kamerasteuereinheit verbunden ist und die Kamerasteuereinheit die Datenschnittstelle steuert. Über die Datenschnittstelle können verschiedene Software-Recheneinheiten angeschlossen werden, wodurch der Kamerakern flexibel erweitert und skaliert werden kann, um die Smart Kamera flexibel an die Anforderungen anzupassen.

In einer vorteilhaften Ausgestaltung ist in der Hardware-Recheneinheit eine Datenbus-Schnittstelle zum Anschluss eines nicht echtzeitfähigen Datenbusses vorgesehen, wobei die Datenbus-Schnittstelle mit der Kamerasteuereinheit verbunden ist und die Kamerasteuereinheit die Datenbus-Schnittstelle steuert. Über die nicht echtzeitfähige Datenbus-Schnittstelle können das Ergebnis der Bearbeitung der aufgenommen Bilddaten, z.B. in Form eines Ausgabesignals, oder auch Bilddaten selbst versendet werden. Ferner kann die Datenbus-Schnittstelle auch zum Konfigurieren des Kamerakerns, oder Komponenten davon, oder zum Laden von Programmen in eine allfällig angeschlossene Software-Recheneinheit verwendet werden, ohne den Echtzeit-Datenbus zu belasten.

Vorteilhafterweise ist in der Hardware-Recheneinheit eine Beleuchtungsschnittstelle zum Anschließen einer Beleuchtungseinheit vorgesehen, die von Kamerasteuereinheit gesteuert wird. Das ermöglicht die Synchronisierung der Beleuchtung mit dem echtzeitfähigen Auslösen der Bildaufnahme.

Externe Komponenten der Smart Kamera können einfach synchronisiert werden, wenn in der Hardware-Recheneinheit eine I/O-Schnittstelle vorgesehen ist, die von Kamerasteuereinheit gesteuert wird.

Um eine schneller Vorbearbeitung der eingelesenen Bilddaten im Kamerakern zu ermöglichen, kann in der Hardware-Recheneinheit eine Bildverarbeitungseinheit zum Bearbeiten von Bilddaten vorgesehen und/oder die Kamerasteuereinheit selbst zum Bearbeiten von Bilddaten vorgesehen sein.

Vorzugsweise wird die Bildaufnahme der Smart Kamera ausgelöst und/oder die Beleuchtungseinheit aktiviert, wenn die Kamerasteuereinheit über einen an die Echtzeit-Datenbus-Schnittstelle angeschlossen Echtzeit-Datenbus ein Synchronisations-Datenpaket empfängt, oder wenn die Kamerasteuereinheit über einen an die I/O-Schnittstelle angeschlossenen Triggereingang ein Triggersignal empfängt.

Um die Möglichkeiten der Bearbeitung der Bilddaten zu erweitern, kann an der Datenschnittstelle eine Software-Recheneinheit angeschlossen sein, die Bilddaten vom Kamerakern erhält und bearbeitet.

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt
Fig.1 eine erfindungsgemäße Smart Kamera mit Kamerakern,
Fig.2 eine weitere Ausgestaltung einer erfindungsgemäßen Smart Kamera mit Kamerakern und
Fig.3 und 4 die Einbindung einer Smart Kamera in einer Steuerungsverbund mit industrieller Bildverarbeitung.

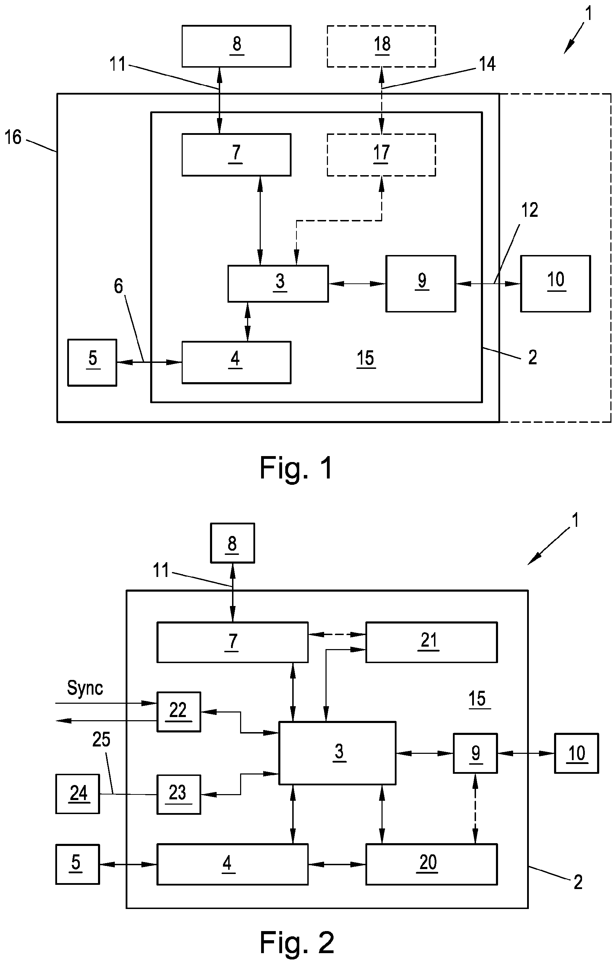

Mit Fig.1 werden die wesentlichen Komponenten einer erfindungsgemäßen Smart Kamera 1 beschrieben. Im Zentrum der Smart Kamera 1 steht der als Hardware-Recheneinheit 2 ausgeführte erfindungsgemäße Kamerakern 15. Die Hardware-Recheneinheit 2 ist beispielsweise ein FPGA, ASIC oder CPLD Baustein, also eine integrierte elektronische Schaltung, in der die benötigten Funktionen hardwaremäßig realisiert sind. "Hardwaremäßig realisiert" bedeutet dabei, dass die benötigten Funktionen durch eine digitale Schaltung realisiert sind. Die Hardware-Recheneinheit 2 umfasst im gezeigten Ausführungsbeispiel eine Bildsensor-Schnittstelle 4, eine Echtzeit-Datenbus-Schnittstelle 7, eine Datenschnittstelle 9 und eine Kamerasteuereinheit 3.

An die Bildsensor-Schnittstelle 4 kann über eine Bildsensorleitung 6 ein Bildsensor 5 zur digitalen Aufnahme eines Bildes angeschlossen werden. Die Bildsensorleitung 6 kann eine Bildsensor-Datenleitung und eine Bildsensor-Steuerleitung zur Konfiguration des Bildsensors 5 und Triggerung der Bildaufnahme umfassen. Über die Bildsensorleitung 6 werden die Bilddaten vom Bildsensor 5 an die Bildsensor-Schnittstelle 4 des Kamerakerns 15 übertragen. Zusätzliche Konfigurationsleitungen in der Bildsensorleitung 6 können die Einstellungen weiterer für die Bildgebung wichtiger und möglicherweise vorhandener Komponenten, wie beispielsweise der Fokus (auch als Autofokus) und die Blende einer Optik des Bildsensors 5, bedarfsweise eingestellt oder verstellt werden. Zur Übertragung der Bilddaten ist natürlich vorzugsweise eine ausreichend schnelle Bildsensorleitung 6 vorgesehen, beispielsweise eine breitbandige Datenschnittstelle.

An die Echtzeit-Datenbus-Schnittstelle 7 kann ein echtzeitfähiger Datenbus 11 angeschlossen werden. Damit kann der Kamerakern 15, oder die Smart Kamera 1, in einen Echtzeitsystem eingebunden werden. Beispielsweise kann die Smart Kamera 1 damit an eine externe Steuereinheit 8 angeschlossen werden, die die Smart Kamera 1 in die Echtzeitsteuerung einer Maschine oder Anlage integriert. Es gibt eine Fülle von echtzeitfähigen Datenbusen, insbesondere Ethernet basierte Feldbusse, wie beispielsweise POWERLINK, EtherNet/IP, Profinet, SERCOS III, usw., die hierbei verwendet werden können. Ebenso kann die Echtzeit-Datenbus-Schnittstelle 7 für verschiedene bekannte Kommunikationsprotokolle, wie beispielsweise CANopen, OPC UA, openSAFETY, usw. implementiert werden. Für die industrielle Anwendung spricht man häufig von echtzeitfähigen Datenbussen, wenn diese Buszyklen von kleiner 1ms sicherstellen, wobei in jedem Buszyklus Daten gemäß dem implementierten Kommunikationsprotokoll übertragen werden können. Beispielsweise können mit POWERLINK Buszyklen im Bereich von 100µs bei einem Jitter von kleiner 1µs sichergestellt werden. An die Datenschnittstelle 9 kann über einen Datenbus 12 eine Software-Recheneinheit 10 angeschlossen werden. Es muss aber in der Smart Kamera 1 nicht zwingend eine Software-Recheneinheit 10 vorgesehen sein. Die Software-Recheneinheit 10 ist beispielsweise ein Mikroprozessor, ein DSP (digitaler Signalprozessor), ein Computer, oder ähnliches. Die Software-Recheneinheit 10 zeichnet sich dadurch aus, dass diese ihre Funktionalität durch Programmierung erhält, die beispielsweise in die Software-Recheneinheit 10 geladen werden. Die benötigten Programme werden auf der Software-Recheneinheit 10 ausgeführt. Die Anforderung an die Datenschnittstelle 9 sind dabei losgelöst von einer Echtzeittauglichkeit der Smart Kamera 1, weil die echtzeitkritische Bildaufnahme nicht über diese Datenschnittstelle 9 ausgelöst werden muss. Die Bandbreite der Datenschnittstelle 9 ist lediglich entscheidend für die Gesamtperformance der Smart Kamera 1 wenn die Bilddaten auf der Software-Recheneinheit 10 bearbeitet werden, weswegen als Datenschnittstelle 9 eine LVDS (Low Voltage Differential Signaling) Schnittstelle, wie z.B. ein PCle (Peripheral Component Interconnect Express) Bus verschiedener Generationen (aktuell PCle V4.0), oder ein MIPI (Mobile Industry Processor Interface Alliance) Camera Serial Interface oder jede andere geeignete hochperformante Datenschnittstelle verwendet werden kann.

Zusätzlich ist im Kamerakern 15 eine Kamerasteuereinheit 3 implementiert, die die Bildsensor-Schnittstelle 4, die Echtzeit-Datenbus-Schnittstelle 7 und die Datenschnittstelle 9 steuert. Steuern bedeutet in diesem Zusammenhang, dass die Kamerasteuereinheit 3 die Aufnahme eines Bildes mit dem Bildsensor 5 und das Einlesen von Bilddaten über die Bildsensor-Schnittstelle 4 auslöst, die Echtzeit-Datenkommunikation über den Echtzeitdatenbus 11 und die Echtzeit-Datenbus-Schnittstelle 7 steuert und gegebenenfalls auch die Datenkommunikation über die Datenschnittstelle 12 mit der Software-Recheneinheit 10 steuert. Aufgrund der Ausführung des Kamerakerns 15 als Hardware-Recheneinheit 2 können die einzelnen Komponenten mit Echtzeitanforderung, insbesondere die Bildsensor-Schnittstelle 4 und die Echtzeit-Datenbus-Schnittstelle 7, parallel und im Wesentlichen unabhängig voneinander ihre Funktionen ausführen. Auch andere Komponenten, die nicht unbedingt Echtzeitanforderungen genügen müssen, wie eine Datenschnittstelle 9, können parallel ausgeführt werden. Damit kann es zu keinen zeitlichen Verzögerungen, wie beispielsweise Interrupt Latenzzeiten, Priorisierung von Software, usw., kommen. Diese zeitkritischen Funktionen werden folglich direkt durch die Hardware-Recheneinheit 2 selbst gesteuert und können damit sehr schnell ausgeführt werden, was den Kamerakern 15 grundsätzlich echtzeitfähig macht, vor allem auch weil alle für die Synchronisierung der Bildauslösung erforderlichen Komponenten über die Echtzeit-Datenbus-Schnittstelle 7 auch mit anderen Echtzeitkomponenten verbunden werden können. Damit ist insbesondere das Auslösen einer Bildaufnahme durch den Bildsensor 5 in das Echtzeitsystem eingebunden und kann in Echtzeit erfolgen.

In der Kamerasteuereinheit 3 kann auch eine Vorbearbeitung der vom Bildsensor 5 eingelesenen Bilddaten erfolgen, bevor die Bilddaten gespeichert werden oder in der Smart Kamera 1 einer weiteren Bearbeitung, z.B. in der Software-Recheneinheit 10, zugeführt werden. In einfachen Anwendungen kann in der Kamerasteuereinheit 3 auch die komplette Bearbeitung der eingelesenen Bilddaten erfolgen, womit unter Umständen auch auf eine Software-Recheneinheit 10 zur weiteren Bearbeitung verzichtet werden kann. In einer einfachen Implementierung des Kamerakerns 15 kann folglich auf die Datenschnittstelle 9 auch verzichtet werden.

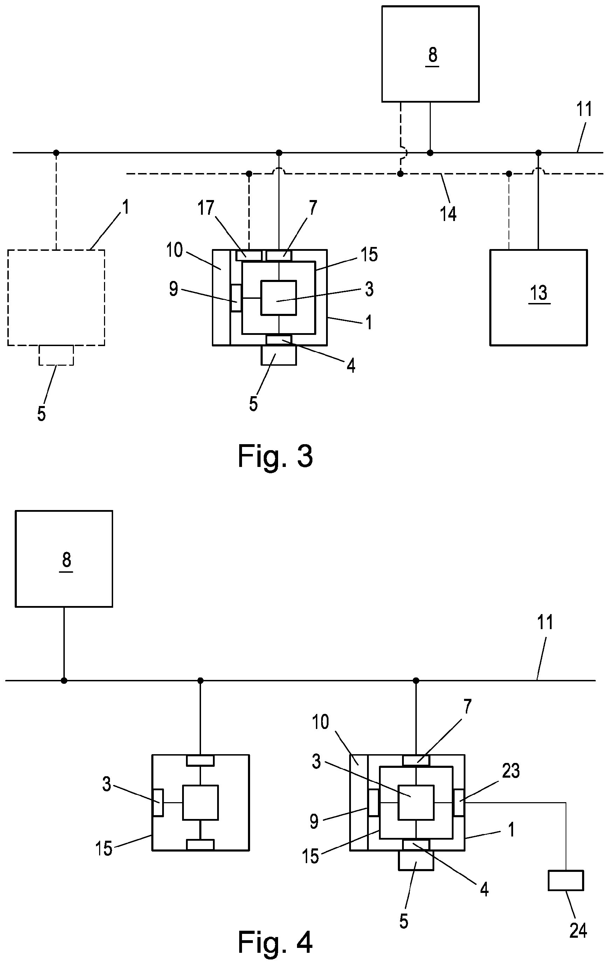

Zusätzlich kann im Kamerakern 15 auch eine Datenbus-Schnittstelle 17 implementiert sein, um den Kamerakern 15, oder die Smart Kamera 1, mit einem nicht echtzeitfähigen Datenbus 14 zu verbinden, wie in Fig.8 gestrichelt dargestellt. Auch die Datenbus-Schnittstelle 17 wird vorzugsweise von der Kamerasteuereinheit 3 gesteuert. Der Datenbus 14 kann beispielsweise ein Ethernet Bus sein, mit TCP/IP als Kommunikationsprotokoll. Damit kann der Kamerakern 15, oder die Smart Kamera 1, auch mit anderen Komponenten 18, beispielsweise einer Maschine oder Anlage, verbunden werden, die keiner Echtzeitanforderung genügen müssen. Natürlich könnte auch eine Steuereinheit 8, oder eine andere Netzwerkkomponente, mit einer Schnittstelle für den nicht echtzeitfähigen Datenbus 14 und einer Schnittstelle für den echtzeitfähigen Datenbus 11 vorgesehen sein, die dann sowohl mit der Datenbus-Schnittstelle 17 und der Echtzeit-Datenbus-Schnittstelle 7 verbunden werden kann (z.B. wie in Fig.3 dargestellt). Beispielsweise kann über den nicht echtzeitfähigen Datenbus 14 auch das Ergebnis der Bildbearbeitung in der Smart Kamera 1 ausgegeben werden.

Diese grundlegende Architektur der Smart Kamera 1 hat aber ferner den Vorteil, dass an den Kamerakern 15 über dessen Schnittstellen (Bildsensor-Schnittstelle 4, Echtzeit-Datenbus-Schnittstelle 7, gegebenenfalls Datenschnittstelle 9 und gegebenenfalls auch Datenbus-Schnittstelle 17) verschiedene Bauteile angeschlossen werden können, was eine besonders flexible Konfiguration der Smart Kamera 1 ermöglicht. Beispielsweise kann der Bildsensor 5 gemeinsam mit dem Kamerakern 15 in einem Kameragehäuse 16 angeordnet sein, wie in Fig.1. Ebenso könnte aber auch ein externer Bildsensor 5 über die Bildsensor-Schnittstelle 4 an den Kamerakern 15 im Kameragehäuse 16 angeschlossen werden. Damit können verschiedene Bildsensoren 5, oder ein Bildsensor 5 mit verschiedenen Optiken, mit demselben Kamerakern 15 verwendet werden. In gleicher Weise kann die Software-Recheneinheit 10 im Kameragehäuse 16 angeordnet sein, wie in Fig.1 strichliert angedeutet. Es kann aber über die Datenschnittstelle 12 auch eine externe Software-Recheneinheit 10 an den Kamerakern 15 angeschlossen werden. Auf diese Weise kann beispielsweise ein leistungsfähigerer Prozessor verwendet werden, oder der Kamerakern 15 kann auch an einen (Industrie-)PC als Software-Recheneinheit 10 angeschlossen werden. Auch das gibt, neben den Möglichkeiten für den Echtzeit-Datenbus 11, eine Reihe von Möglichkeiten zur Konfiguration einer echtzeitfähigen Smart Kamera 1.

Bei Verwendung eines (Industrie-)PCs oder eines leistungsfähigen DSP als Software-Recheneinheit 10 könnten auch mehrere Kamerakerne 15 an eine einzige Software-Recheneinheit 10 angeschlossen werden.

Durch diese Trennung des echtzeitfähigen Kamerakerns 15 und der Software-Recheneinheit 10 ohne Echtzeitanforderungen, lassen sich modulare Kamerasysteme entwickeln die sich in ihrer Echtzeitfähigkeit hinsichtlich der Bildauslösung nicht unterscheiden, gleichgültig wie leistungsfähig die Software-Recheneinheit 10 ist. Das ermöglicht eine besonders flexible Konfiguration einer Smart Kamera 1.

Daneben können im Kamerakern 15 auch noch weitere Funktionen einer Smart Kamera 1 hardwaremäßig, also als digitale Schaltung, implementiert sein, wie anhand von Fig.2 erläutert wird. Die nachfolgend beschriebenen Zusatzfunktionalitäten können natürlich unabhängig von anderen Zusatzfunktionalitäten und in beliebiger Kombination realisiert sein. Der Vorteil der hardwaremäßigen Implementierung im Kamerakern 15 ist wieder, dass die Zusatzfunktionen parallel ausgeführt werden können.

Über eine Beleuchtungsschnittstelle 23 kann beispielsweise über eine geeignete Beleuchtungsverbindung 25 eine externe Beleuchtungseinheit 24 an den echtzeitfähigen Kamerakern 15 angeschlossen werden. Das ermöglicht es, die Beleuchtungseinheit 24 über die Kamerasteuereinheit 3 zu steuern, beispielsweise in Form eines mit der Bildaufnahme synchronisierten Blitzlichtes.

Alternativ könnte eine Beleuchtungseinheit 24 selbst eine Echtzeitkomponente sein, die direkt an den Echtzeit-Datenbus 11 angeschlossen werden kann und die beispielsweise von einer Steuereinheit 8 am Echtzeit-Datenbus 11 gesteuert wird.

Über eine allgemeine I/O-Schnittstelle 22 können beliebige weitere externe Geräte oder Funktionen angeschlossen oder snychronisiert werden. Beispielsweise könnte über die I/O-Schnittstelle 22 ein externer Triggereingang Sync realisiert werden, um die Smart Kamera 1 auf eine externe Funktion zu synchronsieren, die beispielsweise nicht über die Echtzeit-Datenbus-Schnittstelle 7 realisiert wird. Ebenso könnte über die I/O-Schnittstelle 22 auch eine externe Komponente von der Smart Kamera 1 aus synchronisiert werden. Da externe Komponenten, die nicht über die Echtzeit-Datenbus-Schnittstelle 7 integriert werden, üblicherweise mit einem nicht vollständig korrigierbaren Jitter behaftet sind, kann die Leistungsfähigkeit des Gesamtsystems dabei aber geringer sein als bei einer vollständig über die Echtzeit-Datenbus-Schnittstelle 7 integrierten Lösung (die damit vorteilhafter ist).

Im Kamerakern 15 kann auch eine Bildverarbeitungseinheit 20 vorgesehen sein, in der eine bestimmte (Vor-)Bearbeitung der Bilddaten vom Bildsensor 5 erfolgen kann. Die Bildverarbeitungseinheit 20 könnte natürlich auch in der Kamerasteuereinheit 3 oder der Bildsensor-Schnittstelle 4 realisiert sein. Die (vor-)bearbeiteten Bilddaten können von der Bildverarbeitungseinheit 20 über die Kamerasteuereinheit 3 und die Datenschnittstelle 9, oder auch direkt über die Datenschnittstelle 9, wie strichliert in Fig.2 angedeutet, an die Software-Recheneinheit 10 übermittelt werden. In der Software-Recheneinheit 10 können die Bilddaten oder die (vor-)bearbeitete Bilddaten weiterverarbeitet werden. Nach der Weiterbearbeitung der Bilddaten in der Software-Recheneinheit 10 können diese auch wieder zurück in den Kamerakern 15 übertragen werden, beispielsweise um dort gespeichert zu werden oder über die Datenbus-Schnittstelle 17 ausgegeben zu werden.

Im Kamerakern 15 kann auch eine Speichereinheit 21 realisiert sein, um Bilddaten vom Bildsensor 5, (vor-)bearbeitete Bilddaten und/oder in der Software-Recheneinheit 10 weiterverarbeiteten Bilddaten zu speichern, beispielsweise um dann über die Echtzeit-Datenbus-Schnittstelle 7 ausgegeben zu werden. Die Speichereinheit 21 könnte auch als Speichermodul, beispielsweise ein SD-RAM oder DDR3, an den Kamerakern 15 angebunden sein. Dazu kann im Kamerakern 15 eine Speichersteuereinheit implementiert sein, an die das Speichermodul angeschlossen wird. Die Speichersteuereinheit wäre dann mit der Kamerasteuereinheit 3 verbunden und von dieser gesteuert. Ebenso kann natürlich auch die Software-Recheneinheit 10 in bekannter Weise eine Speichereinheit aufweisen.

Das Ergebnis der Bearbeitung der mit dem Bildsensor 5 aufgenommenen Bilddaten in der Smart Kamera 1 in Form eines Ausgabesignals kann ebenfalls über die Echtzeit-Datenbus-Schnittstelle 7 an andere mit der Smart Kamera 1 über den Echtzeit-Datenbus 11 verbundene Komponenten, beispielsweise eines Regelungs- oder Steuerungsverbundes, gesendet werden. Alternativ könnte das Ergebnis aber auch über eine Datenbus-Schnittstelle 17 gesendet werden, beispielsweise, um die Bandbreite des echtzeitfähigen Datenbusses 11 nicht zu belasten. Es wäre aber auch denkbar, dass die Software-Recheneinheit 10 eine eigene Datenbus-Schnittstelle besitzt, über die das in der Software-Recheneinheit 10 ermittelte Ergebnis versendet wird, beispielsweise über einen angebundenen nicht echtzeitfähigen Datenbus 14. Das Ergebnis der Bearbeitung steht üblicherweise nicht in Echtzeit zur Verfügung, weshalb es kein Problem ist, dieses nicht über den Echtzeit-Datenbus 11 zu versenden. Falls das Ergebnis aber vom Kamerakern 15 im vorgegebenen Echtzeitzeitschritt, also in Echtzeit, bereitgestellt werden kann, kann auch das Ergebnis in Echtzeit über den Echtzeit-Datenbus 11 versendet werden. Damit wäre nicht nur das Auslösen der Bildaufnahme in Echtzeit möglich, sondern auch das Bereitstellen des Ergebnisses der Bearbeitung der eingelesenen Bilddaten. Beispielsweise könnte das Ergebnis die Information einer Ausrichtung eines aufgenommenen Objekts sein, der Typ eines Objekts sein, ein fehlerhaftes Werkstück markieren, usw. Den Möglichkeiten der Bearbeitung der Bilddaten sind hier natürlich keine Grenzen gesetzt. Es können über den Echtzeit-Datenbus 11 oder den nicht echtzeitfähigen Datenbus 14 auch Bilddaten übermittelt werden, was aber üblicherweise nicht erforderlich oder erwünscht ist.

Der genaue Ablauf des Bildeinzuges (Einlesen der Bilddaten vom Bildsensor 5) nach dem Auslösen der Bildaufnahme, die Dauer einer eventuell vorgesehenen Belichtung, HDR (High Dynamic Range) oder Multiaufnahmen, usw., sind Bestandteil der Konfiguration der Smart Kamera 1, die üblicherweise vor der Verwendung der Smart Kamera 1 durchgeführt wird. Dazu können beispielsweise Konfigurationsparameter in einer Speichereinheit 21 gesetzt werden oder die Software-Recheneinheit 10 programmiert werden. Dazu kann beispielsweise die Datenbus-Schnittstelle 17 verwendet werden. Die Konfiguration kann auch beim Erstellen der digitalen Schaltung der Hardware-Recheneinheit 2, beispielsweise der Bildverarbeitungseinheit 20, erfolgen. Die weitere vorgesehene Bildbearbeitung der Smart Kamera 1 wird dann zeitsynchron vom Kamerakern 15 erledigt.

Der Kamerakern 15 stellt die Echtzeitfähigkeit der Bildaufnahme, also das Auslösen der Bildaufnahme und gegebenenfalls der Beleuchtung, sicher. Alles andere wie das Auslesen des Bildes vom Bildsensor 5, die Vorbearbeitung (z.B. in der Bildverarbeitungseinheit 20) und/oder Weiterbearbeitung (z.B. in der Software-Recheneinheit 10) der ausgelesenen Bilddaten ist aufgrund der Datenmenge und der oftmals komplexen Bearbeitung der Bilddaten üblicherweise nicht echtzeitfähig (also in einem Echtzeitzyklus durchführbar). Das Ergebnis der Bearbeitung der ausgelesenen Bilddaten muss in vielen Anwendungen nur möglichst oder ausreichend zeitnah im Kamerakern 15 verfügbar sein, was durch die Performance rundherum, Software-Recheneinheit 10, Datenschnittstelle 9, Bildverarbeitungseinheit 20, usw., festgelegt wird. Wenn aber die Bearbeitung der ausgelesenen Bilddaten in der Smart Kamera 1, beispielsweise in der Software-Recheneinheit 10, der Bildverarbeitungseinheit 20 und/oder der Kamerasteuereinheit 3, in ausreichend kurzer Zeitspanne (innerhalb eines definierten Echtzeitzyklus) abgeschlossen ist, dann kann auch für die Ausgabe des Ausgabesignals durch die Smart Kamera 1 Echtzeitfähigkeit sichergestellt werden. Der erfindungsgemäße echtzeitfähige Kamerakern 15 ermöglicht es daher auch die Smart Kamera 1 auf einfache Weise den Anforderungen und der Anwendung gemäß zu skalieren, beispielsweise durch das Anbinden verschiedener Software-Recheneinheiten 10 oder durch das Konfigurieren einer Bildverarbeitungseinheit 20.

Die erfindungsgemäße Smart Kamera 1 könnte in einer Anwendung der industriellen Bildverarbeitung (Machine Vision Anwendung) verwendet werden, wie anhand der Fig.3 beispielhaft erläutert wird. Eine Maschine oder Anlage 13 (oder eine bestimmte Funktion davon, beispielsweise eine Antriebsachse) wird von einer Steuereinheit 8 (z.B. ein Servoverstärker der Antriebsachse) in Echtzeit gesteuert. Dazu sind die Maschine oder Anlage 13 und die Steuereinheit 8 über einen Echtzeit-Datenbus 11, beispielsweise POWERLINK, miteinander verbunden. Die Steuereinheit 8 erhält zur Steuerung über eine Smart Kamera 1 Rückmeldung aus der Maschine oder Anlage 13. Beispielsweise könnte die Maschine 13 eine Druckmaschine sein und mit der Smart Kamera 1 eine aufgedruckte Druckmarke ausgewertet werden, was in der Steuereinheit 8 verwendet wird, um ein Druckwerk in der Druckmaschine zu regeln. Die Smart Kamera 1 ist über den Echtzeit-Datenbus 11 mit der Steuereinheit 8 verbunden. Die Steuereinheit 8 kann die Bildaufnahme durch Smart Kamera 1 über den Echtzeit-Datenbus 11 in Echtzeit steuern. Dabei können natürlich auch mehrere Smart Kameras 1 eingesetzt werden, wie in Fig.3 angedeutet, wobei die Bildaufnahme einer weitere Smart Kamera 1 auch von einer anderen Smart Kamera 1 getriggert werden kann (beispielswiese wieder mittels eines über den Echtzeit-Datenbus 11 versendetes Synchronisations-Datenpaketes). Die Kamerasteuereinheit 3 im Kamerakern 15 löst aufgrund eines über die Echtzeit-Datenbus-Schnittstelle 7 empfangenen Synchronisations-Datenpaketes einer mit der Smart Kamera 1 über den Echtzeit-Datenbus 11 verbundenen externen Komponente, beispielsweise der Steuereinheit 8 oder auch einer anderen echtzeitfähigen Smart Kamera, über die Bildsensor-Schnittstelle 4 das Triggern der Bildaufnahme durch den Bildsensor 5 aus. Der Auslöser der Bildaufnahme kann auch von extern (z.B. über den Triggereingang Sync) erfolgen, womit aber nicht mehr sicher Echtzeit garantiert werden könnte. Vorzugsweise wird die Bildaufnahme daher über den Echtzeit-Datenbus 11, beispielsweise über eine über den Echtzeit-Datenbus 11 empfangene Echtzeit Datenkommunikation, ausgelöst. Mit dem Auslösen der Bildaufnahme werden die Bilddaten vom Kamerakern 15 eingelesen und verarbeitet.

Es kann aber auch ein Kamerakern 15 alleine am Echtzeit-Datenbus 11 verwendet werden, also ohne Bildsensor 5, um eine (oder auch mehrere) Smart Kamera 1, die über den Echtzeit-Datenbus 11 mit dem Kamerakern 15 verbunden ist, in Echtzeit zu triggern, wie in Fig.4 dargestellt. Hierbei würde der Kamerakern 15 beispielsweise von der Steuereinheit 8 den Befehl zur Bildaufnahme erhalten und der Kamerakern 15 würde diesen Befehl über die verbundene Smart Kamera 1, die somit als externer Bildsensor fungiert, umsetzen.

Die eingelesenen Bilddaten vom Bildsensor 5 können an die Bildverarbeitungseinheit 20 zur Vorbearbeitung übergeben oder in der Speichereinheit 21 zwischengespeichert werden, beispielsweise über die Kamerasteuereinheit 3 oder direkt von der Bildsensor-Schnittstelle 4. Bilddaten können auch direkt beim Bildeinzug, parallel und ohne zusätzliche Verzögerung in der Kamerasteuereinheit 3 bearbeitet werden und/oder in einer Bildverarbeitungseinheit 20 bearbeitet werden. Das kann beispielsweise eine Korrektur der Bilddaten anhand von gespeicherten Kalibrierdaten sein, um Abbildungsfehler des optischen Systems auszugleichen. Die eingelesenen Bilddaten könnten aber auch gefiltert werden, im Kontrast geändert werden, die Lage / Ausrichtung / Position eines bestimmten Objekts ermittelt werden, ein bestimmtes Objekt oder ein Merkmal eines Objekts identifiziert werden, eine Messung am aufgenommenen Objekt durchgeführt werden, usw. Hier sind natürlich vielfältigste Möglichkeiten denkbar, um die eingelesenen Bilddaten zu bearbeiten. Die eingelesenen und/oder bearbeiteten Bilddaten können auch in der Speichereinheit 21 gespeichert werden. Das Ergebnis dieser Vorbearbeitung müssen keine Bilddaten mehr sein, sondern kann als Ergebnis ein gewünschtes Ausgabesignal oder die Kombination von beiden sein. Die vorbearbeiteten oder eingelesenen Bilddaten können dann von der Kamerasteuereinheit 3 an die Software-Recheneinheit 10 übergeben werden, um eine gegebenenfalls erforderliche Weiterbearbeitung der Bilddaten durchzuführen. Diese Weiterbearbeitung wird folglich von der Hardware-Recheneinheit 2 ausgelöst. Das Ergebnis dieser Weiterbearbeitung müssen wieder keine Bilddaten mehr sein, sondern kann als Ergebnis ein gewünschtes Ausgabesignal oder die Kombination von beiden sein. Das Ausgabesignal und/oder bearbeiteten Bilddaten werden von der Software-Recheneinheit 10 an die Kamerasteuereinheit 3 und/oder an die Speichereinheit 21 zurückgesendet. Die Kamerasteuereinheit 3 löst bei Abschluss der implementierten Bildverarbeitung das Versenden des Ausgabesignals und/oder von bearbeiteten Bilddaten aus. Das Ausgabesignal oder Bilddaten können dabei über die Datenbus-Schnittstelle 17 und den nicht echtzeitfähigen Datenbus 14 oder über die Echtzeit-Datenbus-Schnittstelle 7 und den Echtzeit-Datenbus 11 ausgegeben werden. Das Ausgabesignal kann beispielsweise an die externe Steuereinheit 8 gesendet werden, die anhand des Ausgabesignals eine Funktion einer Maschine oder Anlage 13 steuern kann. Selbstverständlich könnten über den nicht echtzeitfähigen Datenbus 14 oder Echtzeit-Datenbus 11 auch Bilddaten oder bearbeitete Bilddaten versendet werden, wenn das für eine Anwendung benötigt wird.

## Patentansprüche

1. Kamerakern einer Smart Kamera (1) für die industrielle Bildverarbeitung, mit einer Bildsensor-Schnittstelle (4), zum Anschluss eines Bildsensors (5) zur Aufnahme eines Bildes, wobei der Kamerakern (15) als Hardware-Recheneinheit ausgeführt ist, **dadurch gekennzeichnet, dass** im Kamerakern (15) zusätzlich eine Echtzeit-Datenbus-Schnittstelle (7) zum Anschluss eines Echtzeit-Datenbusses (11) und eine Kamerasteuereinheit (3) vorgesehen sind, wobei die Kamerasteuereinheit (3) mit der Echtzeit-Datenbus-Schnittstelle (11) und der Bildsensor-Schnittstelle (4) verbunden ist, **und dass** die Kamerasteuereinheit (3) nach Empfang eines Synchronisations-Datenpaket über die Echtzeit-Datenbus-Schnittstelle (11) zum Auslösen einer Bildaufnahme innerhalb eines Buszyklus des Echtzeit-Datenbusses (11) angesteuert ist, wobei die Kamerasteuereinheit (3) die Bildsensor-Schnittstelle (4) steuert.

2. Kamerakern nach Anspruch 1, **dadurch gekennzeichnet, dass** in der Hardware-Recheneinheit einer Datenschnittstelle (9) zum Anschluss einer Software-Recheneinheit (10) vorgesehen ist, wobei die Datenschnittstelle (9) mit der Kamerasteuereinheit (3) verbunden ist und die Kamerasteuereinheit (3) die Datenschnittstelle (9) steuert.

3. Kamerakern nach Anspruch 1, **dadurch gekennzeichnet, dass** in der Hardware-Recheneinheit eine Datenbus-Schnittstelle (17) zum Anschluss eines nicht echtzeitfähigen Datenbusses (14) vorgesehen ist, wobei die Datenbus-Schnittstelle (17) mit der Kamerasteuereinheit (3) verbunden ist und die Kamerasteuereinheit (3) die Datenbus-Schnittstelle (17) steuert.

4. Kamerakern nach Anspruch 1, **dadurch gekennzeichnet, dass** in der Hardware-Recheneinheit eine Beleuchtungsschnittstelle (23) zum Anschließen einer Beleuchtungseinheit (24) vorgesehen ist und die Kamerasteuereinheit (3) die Beleuchtungsschnittstelle (23) steuert.

5. Kamerakern nach Anspruch 1, **dadurch gekennzeichnet, dass** in der Hardware-Recheneinheit eine I/O-Schnittstelle (22) vorgesehen ist und die Kamerasteuereinheit (3) die I/O-Schnittstelle (22) steuert.

6. Kamerakern nach Anspruch 1, **dadurch gekennzeichnet, dass** in der Hardware-Recheneinheit eine Bildverarbeitungseinheit (20) zum Bearbeiten von Bilddaten vorgesehen ist und die Kamerasteuereinheit (3) die Bildverarbeitungseinheit (20) steuert.

7. Kamerakern nach Anspruch 1 oder 6, **dadurch gekennzeichnet, dass** die Kamerasteuereinheit (3) zum Bearbeiten von Bilddaten vorgesehen ist.

8. Smart Kamera mit einem Kamerakern (15) nach einem der Ansprüche 1 bis 7, **dadurch gekennzeichnet, dass** an der Bildsensor-Schnittstelle (4) ein Bildsensor (5) angeschlossen ist und die Kamerasteuereinheit (3) die Bildsensor-Schnittstelle (4) zum Auslösen einer Bildaufnahme durch den Bildsensor (5) innerhalb eines Buszyklus des Echtzeit-Datenbusses (11) ansteuert, wenn die Kamerasteuereinheit (3) über einen an die Echtzeit-Datenbus-Schnittstelle (7) angeschlossen Echtzeit-Datenbus (11) ein Synchronisations-Datenpaket empfängt.

9. Smart Kamera nach Anspruch 8, **dadurch gekennzeichnet, dass** in der Hardware-Recheneinheit des Kamerakerns (15) eine Beleuchtungsschnittstelle (23) zum Anschließen einer Beleuchtungseinheit (24) vorgesehen ist und die Kamerasteuereinheit (3) die Beleuchtungsschnittstelle (23) steuert und dass an der Beleuchtungsschnittstelle (23) eine Beleuchtungseinheit (24) angeschlossen ist.

10. Smart Kamera nach Anspruch 8 oder 9, **dadurch gekennzeichnet, dass** die Kamerasteuereinheit (3) die Bildaufnahme auslöst und/oder die Beleuchtungseinheit (24) aktiviert, wenn die Kamerasteuereinheit (3) über einen an die I/O-Schnittstelle (22) angeschlossenen Triggereingang ein Triggersignal empfängt.

11. Smart Kamera nach einem der Ansprüche 8 bis 10, **dadurch gekennzeichnet, dass** an der Datenschnittstelle (9) eine Software-Recheneinheit (10) angeschlossen ist, die Bilddaten vom Kamerakern (15) erhält und bearbeitet.

12. Verfahren zur industriellen Bildverarbeitung von Bilddaten, die mit einem Bildsensor (5) einer Smart Kamera (1) aufgenommen werden, **dadurch gekennzeichnet, dass** der Bildsensor (5) über eine Bildsensor-Schnittstelle (4) eines als Hardware-Recheneinheit ausgeführten Kamerakerns (15) der Smart Kamera (1) mit einer Kamerasteuereinheit (3) des Kamerakerns (15) verbunden wird und die Kamerasteuereinheit (3) mit einer Echtzeit-Datenbus-Schnittstelle (7) des Kamerakerns (15) verbunden wird, wobei die Kamerasteuereinheit (3) das Auslösen einer Bildaufnahme durch den Bildsensor (5) innerhalb eines Buszyklus des Echtzeit-Datenbusses (11) steuert, wenn über einen an die Echtzeit-Datenbus-Schnittstelle (7) angeschlossen Echtzeit-Datenbus (11) ein Synchronisations-Datenpaket empfangen wird.

13. Verfahren nach Anspruch 12, **dadurch gekennzeichnet, dass** Bilddaten in der Kamerasteuereinheit (3) bearbeitet werden.

14. Verfahren nach Anspruch 12 oder 13, **dadurch gekennzeichnet, dass** Bilddaten in einer mit der Kamerasteuereinheit (3) verbundenen Bildverarbeitungseinheit (20) des Kamerakerns (15) bearbeitet werden.

15. Verfahren nach einem der Ansprüche 12 bis 14, **dadurch gekennzeichnet, dass** an eine Datenschnittstelle (9) des Kamerakerns (15) eine Software-Recheneinheit (10) angeschlossen wird und Bilddaten vom Kamerakern (15) an die Software-Recheneinheit (10) gesendet werden und in der Software-Recheneinheit (10) bearbeitet werden.

16. Verfahren nach einem der Ansprüche 13 bis 15, **dadurch gekennzeichnet, dass** durch die Bearbeitung ein Ausgabesignal erzeugt wird, das über die Echtzeit-Datenbus-Schnittstelle (7) oder über eine Datenbus-Schnittstelle (17) im Kamerakern (15) ausgegeben wird.

17. Verfahren nach Anspruch 16, **dadurch gekennzeichnet, dass** die Ausgabe des Ausgabesignals von der Kamerasteuereinheit (3) gesteuert wird.

## Claims

1. Camera core of a smart camera (1) for industrial image processing, comprising an image sensor interface (4) for connecting an image sensor (5) for capturing an image, wherein the camera core (15) is designed as a hardware arithmetic logic unit, **characterized in that** a real-time data bus interface (7), for connecting a real-time data bus (11), and a camera control unit (3) are additionally provided in the camera core (15), the camera control unit (3) being connected to both the real-time data bus interface (11) and the image sensor interface (4), **and in that** the camera control unit (3), after receiving a synchronisation data packet via the real-time data bus interface (11) is actuated to prompt the capture of an image within a bus cycle of the real-time data bus (11), wherein the camera control unit (3) controls the image sensor interface (4).

2. Camera core according to claim 1, **characterized in that** a data interface (9) for connecting a software arithmetic logic unit (10) is provided in the hardware arithmetic logic unit, the data interface (9) being connected to the camera control unit (3), and the camera control unit (3) controlling the data interface (9).

3. Camera core according to claim 1, **characterized in that** a data bus interface (17) for connecting a non-real-time data bus (14) is provided in the hardware arithmetic logic unit, the data bus interface (17) being connected to the camera control unit (3), and the camera control unit (3) controlling the data bus interface (17).

4. Camera core according to claim 1, **characterized in that** an illumination interface (23) for connecting an illumination unit (24) is provided in the hardware arithmetic logic unit, and the camera control unit (3) controls the illumination interface (23).

5. Camera core according to claim 1, **characterized in that** an I/O interface (22) is provided in the hardware arithmetic logic unit, and the camera control unit (3) controls the I/O interface (22).

6. Camera core according to claim 1, **characterized in that** an image processing unit (20) for processing image data is provided in the hardware arithmetic logic unit, and the camera control unit (3) controls the image processing unit (20).

7. Camera core according to either claim 1 or claim 6, **characterized in that** the camera control unit (3) is provided for processing image data.

8. Smart camera comprising a camera core (15) according to any of claims 1 to 7, **characterized in that** an image sensor (5) is connected to the image sensor interface (4) and the camera control unit (3) actuates the image sensor interface (4) to prompt the image sensor (5) to capture an image within a bus cycle of the real-time data bus (11), when the camera control unit (3) receives a synchronisation data packet by means of a real-time data bus (11) connected to the real-time data bus interface (7).

9. Smart camera according to claim 8, **characterized in that** an illumination interface (23) for connecting an illumination unit (24) is provided in the hardware arithmetic logic unit of the camera core (15) and the camera control unit (3) controls the illumination interface (23) and that an illumination unit (24) is connected to the illumination interface (23).

10. Smart camera according to either claim 8 or claim 9, **characterized in that** the camera control unit (3) prompts the capture of an image and/or activates the illumination unit (24) when the camera control unit (3) receives a trigger signal via of a trigger input connected to the I/O interface (22).

11. Smart camera according to any of claims 8 to 10, **characterized in that** a software arithmetic logic unit (10) that receives and processes image data from the camera core (15) is connected to the data interface (9).

12. Method for the industrial image processing of image data captured by an image sensor (5) of a smart camera (1), **characterized in that** the image sensor (5) is connected to a camera control unit (3) of the camera core (15) via an image sensor interface (4) of the camera core (15) of the smart camera (1), which camera core (15) is designed as a hardware arithmetic logic unit, and the camera control unit (3) is connected to a real-time data bus interface (7) of the camera core (15), wherein the camera control unit (3) controls the prompting of an image capture by the image sensor (5) within a bus cycle of the real-time data bus (11), when a synchronisation data packet is received by means of a real-time data bus (11) connected to the real-time data bus interface (7).

13. Method according to claim 12, **characterized in that** image data are processed in the camera control unit (3).

14. Method according to either claim 12 or claim 13, **characterized in that** image data are processed in an image processing unit (20) of the camera core (15), which is connected to the control unit (3).

15. Method according to any of claims 12 to 14, **characterized in that** a software arithmetic logic unit (10) is connected to a data interface (9) of the camera core (15), and image data are sent from the camera core (15) to the software arithmetic logic unit (10) and are processed in the software arithmetic logic unit (10).

16. Method according to any of claims 13 to 15, **characterized in that,** as a result of the processing, an output signal is generated, which is output by means of the real-time data bus interface (7) or by means of a data bus interface (17) in the camera core (15).

17. Method according to claim 16, **characterized in that** the output of the output signal is controlled by the camera control unit (3).

## Revendications

1. Corps de caméra d'une caméra intelligente (1) pour le traitement industriel d'images, comportant une interface de capteur d'images (4) permettant de raccorder un capteur d'images (5) pour enregistrer une image, le corps de caméra (15) étant conçu comme une unité informatique matérielle, **caractérisé en ce qu'**une interface de bus de données en temps réel (7) destinée à raccorder un bus de données en temps réel (11) et une unité de commande de caméra (3) sont en outre prévues dans le corps de caméra (15), l'unité de commande de caméra (3) étant reliée à l'interface de bus de données en temps réel (11) et à l'interface de capteur d'images (4), **et en ce que** l'unité de commande de caméra (3) est activée, après réception d'un paquet de données de synchronisation par l'intermédiaire de l'interface de bus de données en temps réel (11), au cours d'un cycle de bus du bus de données en temps réel (11) afin de déclencher un enregistrement d'image, l'unité de commande de caméra (3) commandant l'interface de capteur d'images (4).

2. Corps de caméra selon la revendication 1, **caractérisé en ce qu'**une interface de données (9) est prévue dans l'unité informatique matérielle pour raccorder une unité informatique logicielle (10), l'interface de données (9) étant reliée à l'unité de commande de caméra (3) et l'unité de commande de caméra (3) commandant l'interface de données (9).

3. Corps de caméra selon la revendication 1, **caractérisé en ce qu'**une interface de bus de données (17) est prévue dans l'unité informatique matérielle pour raccorder un bus de données (14) non compatible en temps réel, l'interface de bus de données (17) étant reliée à l'unité de commande de caméra (3) et l'unité de commande de caméra (3) commandant l'interface de bus de données (17).

4. Corps de caméra selon la revendication 1, **caractérisé en ce qu'**une interface d'éclairage (23) est prévue dans l'unité informatique matérielle pour raccorder une unité d'éclairage (24) et l'unité de commande de caméra (3) commande l'interface d'éclairage (23).

5. Corps de caméra selon la revendication 1, **caractérisé en ce qu'**une interface d'entrée/sortie (22) est prévue dans l'unité informatique matérielle et l'unité de commande de caméra (3) commande l'interface d'entrée/sortie (22).

6. Corps de caméra selon la revendication 1, **caractérisé en ce qu'**une unité de traitement d'images (20) est prévue dans l'unité informatique matérielle pour traiter des données d'images et l'unité de commande de caméra (3) commande l'unité de traitement d'images (20).

7. Corps de caméra selon la revendication 1 ou 6, **caractérisé en ce que** l'unité de commande de caméra (3) est prévue pour traiter des données d'image.

8. Caméra intelligente comportant un corps de caméra (15) selon l'une des revendications 1 à 7, **caractérisée en ce qu**'un capteur d'images (5) est raccordé à l'interface de capteur d'images (4) et l'unité de commande de caméra (3) active l'interface de capteur d'images (4) au cours d'un cycle de bus du bus de données en temps réel (11) afin de déclencher un enregistrement d'images par le capteur d'images (5) lorsque l'unité de commande de caméra (3) reçoit un paquet de données de synchronisation par l'intermédiaire d'un bus de données en temps réel (11) raccordé à l'interface de bus de données en temps réel (7).

9. Caméra intelligente selon la revendication 8, **caractérisée en ce qu'**une interface d'éclairage (23) est prévue dans l'unité informatique matérielle du corps de caméra (15) pour raccorder une unité d'éclairage (24) et l'unité de commande de caméra (3) commande l'interface d'éclairage (23) et **en ce qu'**une unité d'éclairage (24) est raccordée à l'interface d'éclairage (23).

10. Caméra intelligente selon la revendication 8 ou 9, **caractérisée en ce que** l'unité de commande de caméra (3) déclenche l'enregistrement d'images et/ou active l'unité d'éclairage (24) lorsque l'unité de commande de caméra (3) reçoit un signal de déclenchement par l'intermédiaire d'une entrée de déclenchement raccordée à l'interface d'entrée/sortie (22).

11. Caméra intelligente selon l'une des revendications 8 à 10, **caractérisée en ce qu'**une unité informatique logicielle (10), laquelle reçoit et traite des données d'images du corps de caméra (15), est raccordée à l'interface de données (9).

12. Procédé de traitement industriel d'images de données d'images enregistrées au moyen d'un capteur d'images (5) d'une caméra intelligente (1), **caractérisé en ce que** le capteur d'images (5) est relié à une unité de commande de caméra (3) du corps de caméra (15) par l'intermédiaire d'une interface de capteur d'images (4) d'un corps de caméra (15) de la caméra intelligente (1) conçu comme une unité informatique matérielle, et l'unité de commande de caméra (3) est reliée à une interface de bus de données en temps réel (7) du corps de caméra (15), l'unité de commande de caméra (3) commandant le déclenchement d'un enregistrement d'images par le capteur d'images (5) au cours d'un cycle de bus du bus de données en temps réel (11) lorsqu'un paquet de données de synchronisation est reçu par l'intermédiaire d'un bus de données en temps réel (11) raccordé à l'interface de bus de données en temps réel (7).

13. Procédé selon la revendication 12, **caractérisé en ce que** des données d'images sont traitées dans l'unité de commande de caméra (3).

14. Procédé selon la revendication 12 ou 13, **caractérisé en ce que** des données d'images sont traitées dans une unité de traitement d'images (20) du corps de caméra (15) reliée à l'unité de commande de caméra (3).

15. Procédé selon l'une des revendications 12 à 14, **caractérisé en ce qu'**une unité informatique logicielle (10) est raccordée à une interface de données (9) du corps de caméra (15) et des données d'images sont envoyées depuis le corps de caméra (15) à l'unité informatique logicielle (10) et sont traitées dans l'unité informatique logicielle (10).

16. Procédé selon l'une des revendications 13 à 15, **caractérisé en ce que** le traitement génère un signal de sortie qui est émis par l'intermédiaire de l'interface de bus de données en temps réel (7) ou par l'intermédiaire d'une interface de bus de données (17) dans le corps de caméra (15).

17. Procédé selon la revendication 16, **caractérisé en ce que** la livraison en sortie du signal de sortie est commandée par l'unité de commande de caméra (3).
